# EUROPÄISCHE PATENTSCHRIFT

(11) **EP 1 504 929 B1**
(45) Veröffentlichungstag und Bekanntmachung des Hinweises auf die Patenterteilung: **19.09.2012**
(21) Anmeldenummer: 04015853.7
(22) Anmeldetag: 06.07.2004
(51) Int. Cl.: B60G 17/015, B60G 17/052, B60G 17/04

(54) **Verfahren zur Regelung des Speicherdrucks eines Druckluftspeichers einer Niveauregelanlage für ein Kraftfahrzeug**
Method for controlling the accumulator air pressure in a levelling system for a motor vehicle
Méthode de contrôle de la pression du réservoir à air dans un système de correcteur de hauteur pour véhicule automobile

(30) Priorität: 08.08.2003 DE 10336441
(43) Veröffentlichungstag der Anmeldung: 09.02.2005
(73) Patentinhaber: WABCO GmbH, 30453 Hannover (DE)
(72) Erfinder: Jörg, Meier, 31840 Hessisch Oldendorf (DE); Thielking, Olaf, 30459 Hannover (DE)
(74) Vertreter: Günther, Constantin

(56) Entgegenhaltungen:
- EP-A- 0 844 115
- DE-A1- 10 055 108
- DE-C1- 10 122 567
- DE-C1- 10 160 972
- DE-C1- 19 813 672
- PATENT ABSTRACTS OF JAPAN Bd. 017, Nr. 159 (M-1389), 29. März 1993 (1993-03-29) & JP 04 325324 A (OMRON CORP), 13. November 1992 (1992-11-13)

## Beschreibung

Die Erfindung betrifft ein Verfahren zur Regelung des Speicherdrucks eines Druckluftspeichers einer Niveauregelanlage für ein Kraftfahrzeug gemäß dem Oberbegriff des Patentanspruchs 1.

Gattungsgemäße Verfahren sind beispielsweise aus der DE 101 22 567 C1 oder der DE 101 60 972 C1 bekannt.

Eine Niveauregelanlage für ein Fahrzeug weist üblicherweise an jeder Radaufhängung des Fahrzeuges einen Luftfederbalg auf, bei dem über eine Ventileinrichtung Druckluft zugeführt oder abgeführt werden kann. Für die Bereitstellung der Druckluft ist üblicherweise ein Kompressor vorgesehen. Zur Erzielung kurzer Befüllungsund Entlüftungszeiten der Luftfederbälge, daraus resultierender kurzer Hebe- und Senkzeiten des Fahrzeugaufbaus und zur Einsparung von dafür benötigter Energie ist es vorteilhaft, eine solche Niveauregelanlage als geschlossenes bzw. teilgeschlossenes System mit einem Druckluftspeicher auszubilden. Der Kompressor dient dann vorrangig zum Hin- und Herfördern von Druckluft zwischen dem Druckluftspeicher und den Luftfederbälgen. Je nach Betriebszustand des Fahrzeuges und äußeren Umgebungsbedingungen kann ein unterschiedliches Druckniveau in dem Druckluftspeicher vorteilhaft für die Erreichung kurzer Befüllungs- und Entlüftungszeiten der Luftfederbälge und eines geringen Energieverbrauchs sein.

Aus der eingangs genannten DE 101 60 972 C1 ist bekannt, die Luftmenge in einem Niveauregulierungssytem zu regeln, wobei über einen Temperatursensor die Umgebungstemperatur des Fahrzeuges berücksichtigt wird. Hierbei ist ein gesonderter Temperatursensor zur Ermittlung der Umgebungstemperatur erforderlich. Aus der ebenfalls eingangs genannten DE 101 22 567 C1 ist bekannt, den Speicherdruck des Druckluftspeichers indirekt über die Bestimmung der Luftmenge in der Niveauregelanlage zu regeln, wobei für die Bestimmung der Luftmenge in der Niveauregelanlage vereinfacht angenommen wird, daß diese sich aus Einzelluftmengen in den Luftfederbälgen und im Druckluftspeicher zusammensetzt und die Einzelluftmengen in den Luftfederbälgen aus Druckmeßwerten und Höhensensor-Meßwerten berechenbar sind.

Bei den bekannten Verfahren werden die zur Regelung des Speicherdrucks in der Praxis relevanten physikalischen Größen nicht bzw. nur unzureichend berücksichtigt. So ist beispielsweise die Umgebungstemperatur keine wesentliche, die Effizienz des Betriebs der Niveauregelanlage bestimmende physikalische Größe. Auch eine Bestimmung der Luftmenge führt nicht zu einer physikalischen Größe, mittels der in der Praxis eine befriedigende Effizienz beim Betrieb der Niveauregelanlage erzielt werden kann.

Der Erfindung liegt daher die Aufgabe zugrunde, ein Verfahren zur Regelung des Speicherdrucks eines Druckluftspeichers einer Niveauregelanlage für ein Kraftfahrzeug anzugeben, das einen in der Praxis besonders effizienten Betrieb der Niveauregelanlage erlaubt.

Diese Aufgabe wird durch die in den Patentansprüchen 1 und 5 angegebenen Ausgestaltungen der Erfindung gelöst. Vorteilhafte Weiterbildungen der Erfindung sind in den Unteransprüchen angegeben.

Unter einem effizienten Betrieb der Niveauregelanlage ist beispielsweise ein geringer Energieverbrauch, kurze Hebe- und Senkzeiten des Fahrzeugaufbaus sowie die Möglichkeit, einen auf möglichst geringe Förderleistung ausgelegten Kompressor zu verwenden, zu verstehen.

Die Erfindung hat den Vorteil, daß als physikalische Größen für die Regelung des Speicherdrucks die Größe Beladung des Fahrzeuges herangezogen wird. Unter Niveaulage wird im Zusammenhang mit Niveauregelanlagen für Kraftfahrzeuge die Höhenlage des Fahrzeugaufbaus gegenüber dem Fahrwerk verstanden, d. h. ein vertikales Längenmaß. Unter Beladung wird die Zuladungsmasse in Kilogramm gegenüber der Masse des unbeladenen Fahrzeuges verstanden. Jede dieser Größen für sich hat einen entscheiden Einfluß auf die im Fahrzeugaufbau gespeicherte potentielle Energie (Wₚₒₜ = m * g * h, m = Masse, g = Erdbeschleunigung, h = Höhe). Die Niveaulage hängt direkt mit der Höhe h zusammen, die Beladung hängt direkt mit der Masse m zusammen. Bei einer beispielsweise von dem Benutzer des Fahrzeugs angeforderten Veränderung der Niveaulage des Fahrzeuges, beispielsweise von einem niedrigen Niveau in ein hohes Niveau, ist eine Änderung der in dem Fahrzeugaufbau gespeicherten potentiellen Energie infolge der Höhenveränderung des Fahrzeugaufbaus erforderlich. Die Energieveränderung ist dabei von der Niveauregelungsanlage, welche über die Luftfederbälge den Fahrzeugaufbau trägt, herbei zu führen. Bei einem Anheben oder Absenken des Fahrzeugsaufbaus kann neben dem Kompressor auch die in dem Druckluftspeicher in Form gespeicherter Druckluft vorhandene potentielle Energie einen Beitrag zur Veränderung der potentiellen Energie des Fahrzeugaufbaus liefern, d. h. in diesem Fall zur Erhöhung der potentiellen Energie, sofern der Speicherdruck einen geeigneten Wert aufweist.

In analoger Weise ergibt sich z. B. bei einer Erhöhung der Beladung des Fahrzeuges, etwa beim Hinzusteigen weiterer Fahrgäste, eine Erhöhung der potentiellen Energie des Fahrzeugaufbaus, welche von der Niveauregelanlage zwecks Konstanthaltung der Niveaulage auszugleichen ist. In diesem Fall ist die benötigte potentielle Energie wiederum durch den Kompressor sowie die in dem Druckluftspeicher gespeicherte potentielle Energie zuzuführen.

Gemäß einer vorteilhaften Ausgestaltung der Erfindung weist die Niveauregelanlage wenigstens einen Luftfederbalg mit variablem Balgdruck auf, und eine Rechnereinrichtung für die automatische Ermittlung des Solldruckwerts verwendet wenigstens ein Parameterfeld, welches die Abhängigkeit des Balgdrucks von der Niveaulage und/oder von dem Beladungszustand für diskrete Niveaulagen und/oder Beladungszustände angibt. Unter dem Begriff Balgdruck wird dabei der Luftdruck in einem Luftfederbalg verstanden. Hierdurch können auf einfache Weise die nichtlinearen Beziehungen zwischen dem Balgdruck und der Niveaulage und/oder dem Beladungszustand dargestellt und berücksichtigt werden, welche sich bei Verwendung von handelsüblichen Luftfederbälgen aus Gummi herstellungsbedingt ergeben. Das Volumen eines Luftfederbalgs steigt in dessen normalem Arbeitsbereich in der Regel sowohl mit steigender Auslenkung, d. h. mit steigender Niveaulage des Fahrzeugaufbaus, als auch mit steigendem Druck streng monoton an. Die auslenkungsabhängige Volumenveränderung beruht dabei auf dem Abrollen der Wandung des Luftfederbalgs, die druckabhängige Volumenveränderung beruht auf einer Dehnung der seitlichen Wandung des Luftfederbalges. Typischerweise nimmt die druckabhängige Volumenzunahme bei größerer Auslenkung zu, da ein weiter abgerollter Balg größere Querschnittsvergrößerungen zuläßt. Das genaue Ausmaß dieser druck- und auslenkungsabhängigen Volumenveränderung ist jeweils balgspezifisch und ist im Einzelfall beispielsweise durch Messungen zu bestimmen.

Gemäß einer vorteilhaften Weiterbildung bestimmt die Recheneinrichtung die Beladung des Fahrzeuges mittels des Parameterfeldes. Dies ermöglicht eine schnelle und wenig rechenaufwendige Bestimmung der Beladung mit hoher Genauigkeit.

Gemäß einer vorteilhaften Weiterbildung der Erfindung wird für die automatische Ermittlung des Solldruckwerts ein gemessener Wert der Niveaulage des Fahrzeuges verwendet. Dies hat den Vorteil, daß die Signale vorhandener Sensoren, z. B. der Niveaulagensensoren, verwendet werden können und keine zusätzlichen Sensoren erforderlich sind.

Gemäß einer vorteilhaften Weiterbildung wird zusätzlich oder alternativ für die automatische Ermittlung des Solldruckwerts ein vorgegebener Sollwert der Niveaulage verwendet. Hierfür kann beispielsweise die von dem Benutzer des Fahrzeugs vorgegebene Niveaulage, welche über ein Bedienelement in dem Fahrzeug einstellbar ist, verwendet werden. Bei einer Niveauregelanlage wird üblicherweise der Istwert der Niveaulage automatisch an den vorgegebenen Sollwert der Niveaulage angepaßt. Eine solche Anpassung des Istwerts an den Sollwert ist ein mit einem gewissen Zeitbedarf verbundener Vorgang, bei dem sich der Istwert allmählich verändert. Die Verwendung des Sollwerts für die automatische Ermittlung des Solldruckwerts hat dabei den Vorteil, daß nicht der sich allmählich verändernde Istwert herangezogen wird, was unter Umständen zu einem unbefriedigenden Regelverhalten bei der Regelung des Speicherdrucks führen könnte, sondern der nach Veränderung durch den Benutzer des Fahrzeuges konstante Sollwert.

Die Erfindung wird nachfolgend anhand von Ausführungsbeispielen unter Verwendung von Zeichnungen sowie unter Nennung weiterer Vorteile näher beschrieben.

Es zeigen
- Fig. 1: eine Niveauregelanlage für ein Fahrzeug in schematischer Darstellung und
- Fig. 2: ein beispielhaftes Kennlinienfeld der Abhängigkeit des Balgdrucks von der Niveaulage und der Beladung des Fahrzeuges und
- Fig. 3: eine Ausführungsform des erfindungsgemäßen Verfahrens in Blockdiagrammdarstellung.

In den Figuren werden für einander entsprechende Teile und Elemente gleiche Bezugszeichen verwendet.

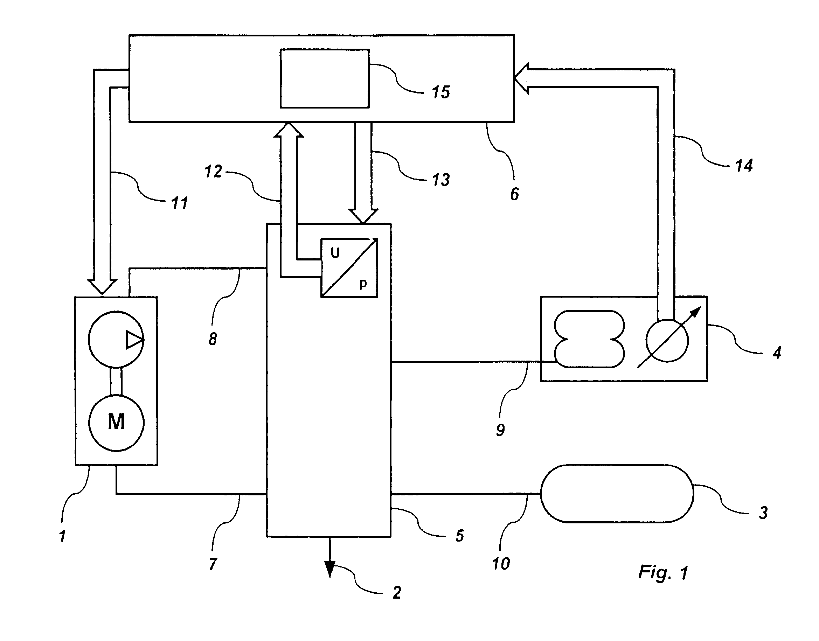

In der Fig. 1 sind zur Vereinfachung der Darstellung nur die für das erfindungsgemäße Verfahren wesentlichen Elemente einer Niveauregelanlage für ein Fahrzeug dargestellt. Die in der Fig. 1 dargestellte Niveauregelanlage weist eine Druckluft-Förderungseinrichtung (1), eine Ventileinrichtung (5), Druckluftleitungen (7, 8) zur Verbindung der Druckluft-Förderungseinrichtung (1) mit der Ventileinrichtung (5), einen mit der Ventileinrichtung (5) verbundenen Atmosphärenanschluß (2), einen Druckluftspeicher (3), eine Druckluftleitung (10) zur Verbindung des Druckluftspeichers (3) mit der Ventileinrichtung (5) sowie einen symbolisch für eine Mehrzahl von Luftfederbälgen dargestellten Luftfederbalg (4) mit damit verbundenem Niveaulagensensor, sowie eine Druckluftleitung (9) zur Verbindung des Luftfederbalgs (4) mit der Ventileinrichtung (5) auf. Des weiteren ist eine elektronische Steuereinrichtung (6) vorgesehen, die eine Rechnereinrichtung (15) zur Ausführung des erfindungsgemäßen Verfahrens enthält. Die elektronische Steuereinrichtung (6) ist über elektrische Signalleitungen (11, 12, 13, 14) mit der Druckluft-Förderungseinrichtung (1), der Ventileinrichtung (5) sowie dem Niveaulagensensor des Luftfederbalgs (4) verbunden.

Die Druckluft-Förderungseinrichtung (1) weist beispielsweise einen Kompressor, der über einen Elektromotor antreibbar ist, auf. Der Kompressor saugt Luft aus der Druckluftleitung (7) an und gibt demgegenüber verdichtete Druckluft über die Druckluftleitung (8) ab. Über die elektrische Signalleitung (11) ist der Kompressor von der elektronischen Steuereinrichtung (6) bei Bedarf ein- und ausschaltbar.

Die Ventileinrichtung (5) dient zur Steuerung der Druckluftströme zwischen den Druckluftleitungen (7, 8, 9, 10) und dem Atmosphärenanschluß (2). Die Ventileinrichtung (5) ist hierfür über eine elektrische Signalleitung (13), ggf. über eine Mehrzahl von elektrischen Signalleitungen, von der elektronischen Steuereinrichtung (6) steuerbar. Je nach Betriebsart der Niveauregelanlage kann die elektronische Steuereinrichtung (6) durch Abgabe geeigneter elektrischer Signale über die elektrische Signalleitung (13) die Ventileinrichtung (5) derart ansteuern, daß Luft über den Atmosphärenanschluß (2) von der Druckluft-Förderungseinrichtung (1) angesaugt wird und wahlweise in den Luftfederbalg (4) oder in den Druckluftspeicher (3) gefördert wird. In einer weiteren Betriebsart kann in der Niveauregelanlage vorhandene Druckluft, beispielsweise aus dem Luftfederbalg (4) oder dem Druckluftspeicher (3), über den Atmosphärenanschluß (2) entlüftet werden, wahlweise mit oder ohne Unterstützung durch die Druckluft-Fördereinrichtung (1). In einer weiteren Betriebsart kann durch entsprechende Einstellung der Ventileinrichtung (5) Druckluft von dem Luftfederbalg (4) zu dem Druckluftspeicher (3) oder umgekehrt geleitet werden, wahlweise mit oder ohne Unterstützung durch die Druckluft-Fördereinrichtung (1).

Die Ventileinrichtung (5) weist zudem einen Drucksensor auf, mit welchem der jeweils vorliegende Druck in dem Luftfederbalg (4) oder Speicherdruck in dem Druckluftspeicher (3) erfaßbar ist. Der Drucksensor gibt ein elektrisches Signal über die elektrische Signalleitung (12) an die elektronische Steuereinrichtung (6) ab, die dieses Drucksignal verarbeitet.

In einer nicht erfindungsgemäßen Ausgestaltung ist in der elektronischen Steuereinrichtung (6) eine Zuordnungstabelle gespeichert, welche eine Zuordnung zwischen dem Solldruckwert des Speicherdrucks und der Niveaulage für bestimmte diskrete Niveaulagen angibt. Die Zuordnungstabelle kann z. B. wie folgt aussehen:

| Niveaulage | Solldruckwert |
|---|---|
| Tiefniveau | 11 bar |
| Fahrniveau | 8 bar |
| Hochniveau | 2 bar |

Die Rechnereinrichtung (15) bestimmt nun aus dem von dem Niveaulagensensor gemeldeten Niveaulagensignal die aktuelle Niveaulage des Fahrzeugaufbaus. In der Praxis wird der Niveaulagensensor Zahlenwerte an die elektronische Steuereinrichtung melden, denen dann bestimmte Niveaulagen gemäß der zuvor angegebenen Zuordnungstabelle zugeordnet worden. In einem solchen Fall ist es vorteilhaft, in der Zuordnungstabelle die korrespondierenden Zahlenwerte für die jeweiligen Niveaulagen vorzusehen. Die Rechnereinrichtung (15) bestimmt dann die der gemeldeten Niveaulage in der Zuordnungstabelle am nächsten kommende Niveaulage. Sodann entnimmt die Rechnereinrichtung (15) der Zuordnungstabelle den dieser Niveaulage zugeordneten Solldruckwert für den Speicherdruck, prüft anhand des mittels des Drucksensors erfaßten Istwerts des Speicherdrucks, ob dieser von dem Solldruckwert abweicht, und erhöht bzw. verringert bei Bedarf den Speicherdruck durch Ausgabe von Ansteuerungssignalen an die Ventileinrichtung (5) und die Druckluft-Förderungseinrichtung (1).

In einer ersten Ausgestaltung der Erfindung ist in der elektronischen Steuereinrichtung (6) eine erweiterte Zuordnungstabelle gespeichert, welche eine Bestimmung eines Solldruckwerts des Speicherdrucks anhand der Niveaulage und zusätzlich anhand der Beladung erlaubt. Hierfür muß die Rechnereinrichtung (15) neben der Niveaulage, wie zuvor beschrieben, auch die Beladung des Fahrzeuges erfassen. Eine Erfassung der Beladung ist z. B. durch Erfassung des Balgdrucks in dem Luftfederbalg (4) denkbar, z. B. über den in der Ventileinrichtung (5) vorgesehenen Drucksensor. Damit ist prinzipiell eine direkte und wenig aufwendige Erfassung der Beladung möglich. Aufgrund der eingangs erläuterten charakteristischen Eigenschaften von Luftfederbälgen ist es gemäß einer weiteren Ausgestaltung der Erfindung vorteilhaft, diese Charakteristika bei der Bestimmung der Beladung zu berücksichtigen.

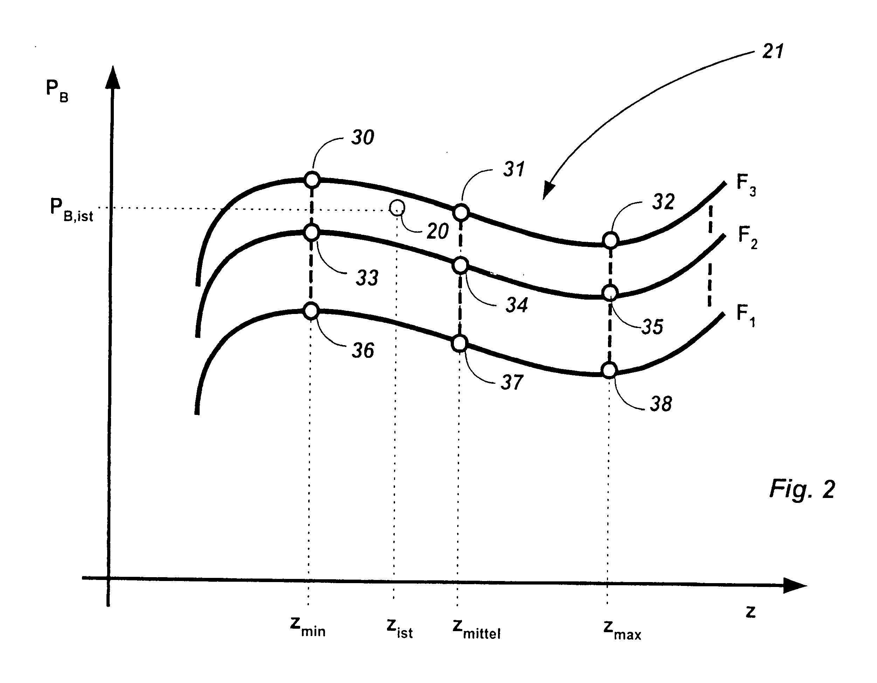

In der Fig. 2 ist der für den Luftfederbalg (4) typische Verlauf des Balgdrucks (p_{B}) über die Auslenkung (Z) für verschiedene Beladungszustände (F₁, F₂, F₃) des Fahrzeuges dargestellt. Die Auslenkung (Z) des Luftfederbalgs (4) verläuft parallel zu der Niveaulage desjenigen Teils des Fahrzeugaufbaus, der über dem Luftfederbalg (4) gegenüber dem Fahrwerk abgestützt ist. Die Auslenkung (Z) entspricht beispielsweise dem von dem Niveaulagensensor an die elektronische Steuereinrichtung (6) gemeldeten Niveaulagensignal. Die in der Fig. 2 dargestellten Kennlinien können experimentell ermittelt werden. Wie aus der Fig. 2 erkennbar ist, verhält sich der Balgdruck (p_{B}) nichtlinear zur Auslenkung (Z). Die Beziehung des Balgdrucks (p_{B}) zur Beladung (F) des Fahrzeuges ist ebenfalls nichtlinear.

Gemäß einer weiteren Ausgestaltung der Erfindung ist in der elektronischen Steuereinrichtung (6) ein Parameterfeld gespeichert, welches diskrete Werte der Kennlinien gemäß Fig. 2 enthält, wie z. B. die Werte (30, 31, 32, 33, 34, 35, 36, 37, 38).

Gemäß einer weiteren Ausgestaltung der Erfindung wird die Beladung des Fahrzeuges von der Rechnereinrichtung (15) unter Verwendung dieses gespeicherten Parameterfeldes bestimmt. Hierfür bestimmt die Rechnereinrichtung (15) zunächst den Balgdruck (p_{B}) sowie die Auslenkung (Z) anhand der Signale des Niveaulagensensors und des Drucksensors. Sodann sucht die Rechnereinrichtung (15) aus dem Parameterfeld die diesen Werten am nächsten kommende Kennlinie heraus. Die zu bestimmende Beladung des Fahrzeuges ist gleich der dieser Kennlinie zugeordneten Beladung. Hierbei werden für den Fall, daß für den jeweiligen Balgdruck (p_{B}) bzw. die Auslenkung (Z) keine exakt zutreffenden Werte in dem Parameterfeld vorhanden sind, Zwischenwerte interpoliert, beispielsweise durch lineare Interpolation der nächstliegenden benachbarten Werte in dem Parameterfeld oder durch ein anderes Interpolationsverfahren, beispielsweise Spline-Interpolation sämtlicher zu einer Kennlinie (F₁, F₂, F₃) gehörender Werte des Parameterfeldes.

Gemäß der ersten Ausgestaltung der Erfindung verwendet die Rechnereinrichtung (15) die derart ermittelte Beladung des Fahrzeuges zusammen mit der Niveaulage, um aus der erweiterten, zweidimensionalen Zuordnungstabelle den Solldruckwert des Speicherdrucks zu bestimmen. Die Zuordnungstabelle kann beispielsweise wie folgt aussehen:

| Sollniveau | Solldruckwert bei minimaler Beladung | Solldruckwert bei mittlerer Beladung | Solldruckwert bei maximaler Beladung |
|---|---|---|---|
| Tiefniveau | 10 bar | 11 bar | 12 bar |
| Fahrniveau | 7 bar | 8 bar | 10 bar |
| Hochniveau | 1 bar | 2 bar | 3 bar |

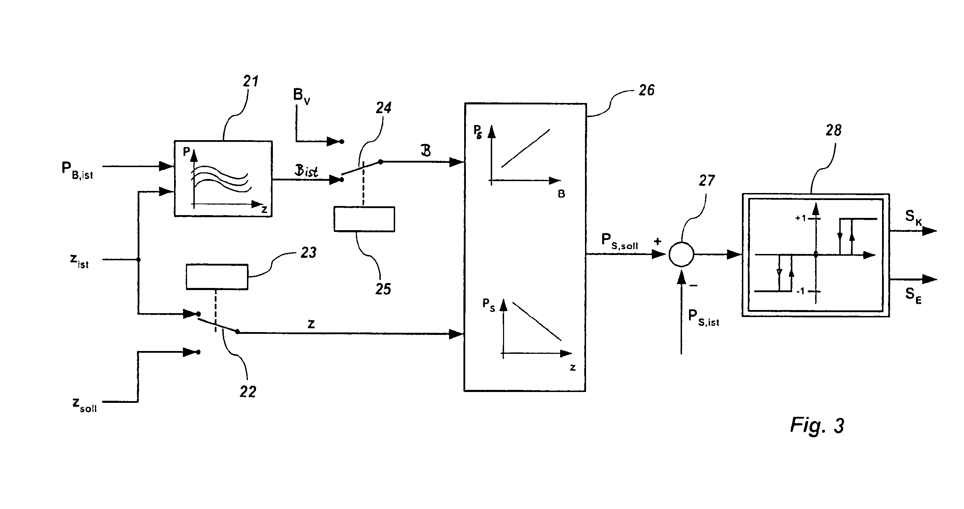

In Fig. 3 ist eine vorteilhafte Ausgestaltung des erfindungsgemäßen Verfahrens zur Regelung des Speicherdrucks des Druckluftspeichers (3) als regelungstechnisches Blockschaltbild dargestellt. In der Fig. 3 ist ein Block (21) vorgesehen, welcher das Parameterfeld gemäß den Kennlinien der Fig. 2 enthält. Weiterhin ist ein Block (26) vorgesehen, welcher Zuordnungsvorschriften für die Zuordnung des Solldruckwerts (P_{S,Soll}) zu der Beladung (B) und der Auslenkung (Z) enthält. Die Zuordnungsvorschriften können beispielsweise als Tabelle, mathematische Funktion oder weiteres Parameterfeld abgelegt sein. Die Zuordnungsvorschriften sind vorzugsweise in der elektronischen Steuereinrichtung (6) gespeichert. Ein weiterer Block (28) symbolisiert einen Dreipunktregler mit Hysterese. Die Hysteresewerte können in vorteilhafter Weise variabel gestaltet sein und in Abhängigkeit von den bereits erwähnten oder weiteren Größen verändert werden. Der Dreipunktregler (28) gibt zwei Schaltsignale (S_{K}, S_{E}) ab, welche von der elektronischen Steuereinrichtung (6) dafür verwendet werden, Steuersignale für die Ventileinrichtung (5) und die Druckluft-Förderungseinrichtung (1) zum Erhöhen oder Verringern des Speicherdrucks zu erzeugen. Die Schaltsignale (S_{K}, S_{E}) sind Ein-/Aus-Signale, wobei nur jeweils eines der Signale den Wert "Ein" annehmen kann.

Des weiteren sind in der Fig. 3 Fehlerdetektoren (23, 25) dargestellt, welche Störungen in der Niveauregelanlage erkennen und hierauf entsprechende Reaktionen auslösen. Als solche Störungen können beispielsweise Defekte an den Sensoren, etwa dem Drucksensor oder den Niveaulagensensoren, in Frage kommen. Bei gestörten Sensorsignalen ist es unter Umständen nicht mehr möglich, bestimmte für die vollständige Funktion des Verfahrens gemäß Fig. 3 notwendige Größen zu bestimmen, etwa die Beladung (B) oder den Istwert der Niveaulage (Z_{Ist}) des gesamten Fahrzeugaufbaus. Daher bewirken die Fehlerdetektoren (23, 25) bei Erkennung eines entsprechenden Fehlers in Verbindung mit Umschaltern (22, 24) eine Umschaltung der verwendeten Signale auf Alternativ-Signale. So löst der Fehlerdetektor (23) über den Umschalter (22) bei einem Defekt oder einer Störung eines Niveaulagensensors eine Umschaltung des Auslenkungs-Signals (Z) von dem Istwert der Niveaulage (Z_{Ist}) zu dem Sollwert der Niveaulage (Z_{Soll}) aus. Bei einem Defekt oder einer Störung an einem der Niveaulagensensoren oder dem Drucksensor ist über das Parameterfeld (21) die Beladung (B) des Fahrzeuges nicht mehr ermittelbar. In einem solchen Fall löst der Fehlerdetektor (25) über den Umschalter (24) eine Umschaltung des Beladungs-Signals (B) auf einen vordefinierten festen Wert der Beladung (B_{V}) aus.

Die Fehlerdetektoren (22, 25) sowie die Schalter (22, 24) können in der elektronischen Steuereinrichtung in Form von Programm-Algorithmen realisiert werden, welche von der Rechnereinrichtung (15) ausgeführt werden.

Das Verfahren zur Regelung des Speicherdrucks gemäß Fig. 3 wird wie folgt durchgeführt:

Aus einem mittels des Drucksensors ermittelten Istwerts des Balgdrucks (p_{B,Ist}) sowie dem Istwert der Niveaulage (Z_{Ist}) wird über das Parameterfeld (21) ein Istwert (B_{Ist}) der Beladung ermittelt. Dieser Istwert (B_{Ist}) der Beladung wird im störungsfreien Fall als Beladungs-Signal (B) dem Block (26) zugeführt. Parallel dazu wird der Istwert der Niveaulage (Z_{Ist}), oder im Fehlerfall der Sollwert der Niveaulage (Z_{Soll}), als Auslenkungs-Signal (Z) dem Block (26) zugeführt. Unter Anwendung der Zuordnungsvorschriften des Blocks (26) berechnet die Rechnereinrichtung (15) einen Solldruckwert (P_{S,Soll}) für den Speicherdruck. Von diesem Solldruckwert (P_{S,Soll}) wird in einem Differenzbilder (27) ein über den Drucksensor ermittelter Istwert des Speicherdrucks (P_{S,Ist}) abgezogen. Das Ergebnis wird als auszuregelnde Differenz dem Dreipunktregler (28) zugeführt. Dieser erzeugt, wie erläutert, die Schaltsignale (S_{K}, S_{E}).

## Patentansprüche

1. Verfahren zur Regelung des Speicherdrucks eines Druckluftspeichers einer Niveauregelaniage für ein Kraftfahrzeug mit einer Druckregeieinrichtung, welche den Speicherdruck gemäß einem vorgegebenen Solldruckwert regelt, **dadurch gekennzeichnet, daß** der Solldruckwert von einer Rechnereinrichtung automatisch unter Verwendung der Beladung des Fahrzeuges ermittelt wird.

2. Verfahren nach Anspruch 1, **dadurch gekennzeichnet, daß** der Solldruckwert von einer Rechnereinrichtung automatisch unter Verwendung der Niveaulage und der Beladung des Fahrzeuges ermittelt wird.

3. Verfahren nach Anspruch 2, **dadurch gekennzeichnet, daß** die Rechnereinrichtung einen desto größeren Solldruckwert ermittelt, je tiefer die Niveaulage des Fahrzeuges ist.

4. Verfahren nach wenigstens einem der vorhergehenden Ansprüche, **dadurch gekennzeichnet, daß** die Rechnereinrichtung einen desto größeren Solldruckwert ermittelt, je höher die Beladung des Fahrzeuges ist.

5. Verfahren zur Regelung des Speicherdrucks eines Druckluftspeichers einer Niveauregelanlage für ein Kraftfahrzeug, mit einer Druckregeleinrichtung, welche den Speicherdruck gemäß einem vorgegebenen Solldruckwert regelt nach wenigstens einem der vorhergehenden Ansprüche, **dadurch gekennzeichnet, daß** die Niveauregelanlage wenigstens einen Luftfederbalg mit variablem Balgdruck aufweist, und daß die Rechnereinrichtung für die automatische Ermittlung des Solldruckwerts wenigstens ein Parameterfeld verwendet, welches die Abhängigkeit des Balgdrucks von der Niveaulage und/oder von dem Beladungszustand für diskrete Niveaulagen und/oder Beladungszustände angibt.

6. Verfahren nach Anspruch 5, **dadurch gekennzeichnet, daß** die Rechnereinrichtung die Beladung des Fahrzeuges mittels des wenigstens einen Parameterfeldes bestimmt.

7. Verfahren nach Anspruch 5 oder 6. **dadurch gekennzeichnet, daß** die Rechnereinrichtung bei Niveaulagen und/oder Beladungszuständen, die nicht den in dem wenigstens einen Parameterfeld vorgesehenen diskreten Werten entsprechen, die Beiadung näherungsweise mittels interpolation bzw. Extrapolation der in dem Parameterfeld vorgesehenen Werte bestimmt.

8. Verfahren nach wenigstens einem der vorhergehenden Ansprüche, **dadurch gekennzeichnet, daß** die Druckregeleinrichtung als Dreipunktregler ausgebildet ist.

9. Verfahren nach wenigstens einem der vorhergehenden Ansprüche, **dadurch gekennzeichnet, daß** für die automatische Ermittlung des Solldruckwerts ein gemessener Istwert der Niveaulage des Fahrzeuges verwendet wird.

10. Verfahren nach wenigstens einem der vorhergehenden Ansprüche, **dadurch gekennzeichnet, daß** für die automatische Ermittlung des Solldruckwerts ein vorgegebener Sollwert der Niveaulage verwendet wird.

## Claims

1. Method for controlling the accumulator pressure in a compressed air accumulator in a ride level control system for a motor vehicle having a pressure regulating device which regulates the accumulator pressure according to a predefined setpoint pressure value, **characterized in that** the setpoint pressure value is automatically determined by a computer device using the load of the vehicle.

2. Method according to Claim 1, **characterized in that** the setpoint pressure value is automatically determined by a computer device using the ride level and the load of the vehicle.

3. Method according to Claim 2, **characterized in that** the computer device determines a larger setpoint pressure value the lower the ride level of the vehicle.

4. Method according to at least one of the preceding claims, **characterized in that** the computer device determines a larger setpoint pressure value the larger the load of the vehicle.

5. Method for regulating the accumulator pressure of a compressed air accumulator of a ride level control system for a motor vehicle, having a pressure regulating device which regulates the accumulator pressure according to a predefined setpoint pressure value, according to at least one of the preceding claims, **characterized in that** the ride level control system has at least one air spring bellows with a variable bellows pressure, and **in that** the computer device uses at least one parameter field for the automatic determination of the setpoint pressure value, which parameter field specifies the dependence of the bellows pressure on the ride level and/or on the load state for discrete ride levels and/or load states.

6. Method according to Claim 5, **characterized in that** the computer device determines the load of the vehicle by means of the at least one parameter field.

7. Method according to Claim 5 or 6, **characterized in that** in the case of ride levels and/or load states which do not correspond to the discrete values provided in the at least one parameter field, the computer device determines the load approximately by means of interpolation or extrapolation of the values provided in the parameter field.

8. Method according to at least one of the preceding claims, **characterized in that** the pressure regulating device is embodied as a three-point regulator.

9. Method according to at least one of the preceding claims, **characterized in that** a measured actual value of the ride level of the vehicle is used for the automatic determination of the setpoint pressure value.

10. Method according to at least one of the preceding claims, **characterized in that** a predefined setpoint value of the ride level is used for the automatic determination of the setpoint pressure value.

## Revendications

1. Procédé de régulation de la pression d'accumulation d'un accumulateur d'air comprimé d'un équipement de régulation de niveau pour un véhicule automobile avec un dispositif de régulation de la pression qui régule la pression d'accumulation en fonction d'une pression de consigne prédéfinie, **caractérisé en ce que** la pression de consigne est déterminée automatiquement par un dispositif de calcul en utilisant la charge du véhicule.

2. Procédé selon la revendication 1, **caractérisé en ce que** la pression de consigne est déterminée automatiquement par un dispositif de calcul en utilisant la position de niveau et la charge du véhicule.

3. Procédé selon la revendication 2, **caractérisé en ce que** le dispositif de calcul détermine une pression de consigne d'autant plus élevée que la position de niveau du véhicule est basse.

4. Procédé selon au moins l'une des revendications précédentes, **caractérisé en ce que** le dispositif de calcul détermine une pression de consigne d'autant plus élevée que la charge du véhicule est élevée.

5. Procédé de régulation de la pression d'accumulation d'un accumulateur d'air comprimé d'un équipement de régulation de niveau pour un véhicule automobile avec un dispositif de régulation de la pression qui régule la pression d'accumulation en fonction d'une pression de consigne prédéfinie selon au moins l'une des revendications précédentes, **caractérisé en ce que** l'équipement de régulation de niveau présente au moins un soufflet d'amortisseur pneumatique à pression de soufflet variable, et **en ce que** le dispositif de calcul utilise pour la détermination automatique de la pression de consigne au moins un diagramme de paramètres qui indique la dépendance de la pression du soufflet à la position de niveau et/ou à l'état de charge pour les positions de niveau et/ou les états de charge discrets.

6. Procédé selon la revendication 5, **caractérisé en ce que** le dispositif de calcul détermine la charge du véhicule au moyen de l'au moins un diagramme de paramètres.

7. Procédé selon la revendication 5 ou 6, **caractérisé en ce que** le dispositif de calcul, dans le cas de positions de niveau et/ou d'états de charge qui ne correspondent pas aux valeurs discrètes prévues dans l'au moins un diagramme de paramètres, détermine la charge de manière approximative par interpolation ou extrapolation des valeurs prévues dans le diagramme de paramètres.

8. Procédé selon au moins l'une des revendications précédentes, **caractérisé en ce que** le dispositif de régulation de la pression est réalisé sous la forme d'un régulateur à trois points.

9. Procédé selon au moins l'une des revendications précédentes, **caractérisé en ce qu'**une valeur réelle mesurée de la position de niveau du véhicule est utilisée pour la détermination automatique de la pression de consigne.

10. Procédé selon au moins l'une des revendications précédentes, **caractérisé en ce qu'**une valeur de consigne prédéfinie de la position de niveau est utilisée pour la détermination automatique de la pression de consigne.
